# EUROPÄISCHE PATENTANMELDUNG

(11) **EP 4 006 802 A1**
(43) Veröffentlichungstag der Anmeldung: **01.06.2022**
(21) Anmeldenummer: 21020504.3
(22) Anmeldetag: 11.10.2021
(51) Int. Cl.: G06Q 20/06, G06Q 20/40, G07F 5/24, G07F 9/04, G07G 1/06

(54) **ZAHLUNGSVERFAHREN**

(30) Priorität: 30.11.2020 DE 102020007297
(71) Anmelder: Giesecke+Devrient Currency Technology GmbH, 81677 München (DE)
(72) Erfinder: Jüttner, Christian, 82031 Grünwald (DE); Schiffmann, Peter, 81673 München (DE); Heine, Astrid, 85551 Kirchheim (DE); Veleva, Maria, 80689 München (DE); Franz, Peter, 85567 Pienzenau/Bruck (DE)
(74) Vertreter: Giesecke + Devrient IP

(57) **Zusammenfassung**

Die Erfindung betrifft ein Zahlungsverfahren mit Wechselgeld, umfassend die folgenden Schritte:
a) Berechnen (S2) eines Wechselgeldbetrags ausgehend von einem Zahlungsbetrag und einem Einzahlbetrag in einer Zahlungseinheit (2);
b) Senden (S3) von Wechselgeld, welches dem Wechselgeldbetrag entspricht, von der Zahlungseinheit (2) an eine Wechselgeldspeichereinheit; wobei die Wechselgeldspeichereinheit eine Münze (6) oder Banknote (5) ist, welche einen Wechselgeldspeicher (66; 56) umfasst.

## Beschreibung

Die Erfindung bezieht sich auf ein Zahlungsverfahren mit Wechselgeld. Ausgehend von einem Zahlungsbetrag und einem Einzahlbetrag wird ein Wechselgeldbetrag errechnet, der bargeldlos an den Zahlenden ausgegeben werden soll.

In einer Kasse wird im Rahmen einer Zahlung regelmäßig aus einem vom Käufer zu entrichtenden Kaufbetrag und einem vom Käufer bezahlten Zahlbetrag ein von der Kasse auszugebender Wechselgeldbetrag errechnet. Es sind Kassen bekannt, die den errechneten Wechselgeldbetrag automatisch - zumindest teilweise in Form von Münzen - an den Käufer ausgeben.

Münzen erfordern jedoch insgesamt immer noch einen im Verhältnis zum Münzwert hohen Aufwand bei Händlern. Beispielsweise ist die Bevorratung von Münzen in ausreichender Anzahl pro Münzwert aufwendig.

Bereits vorgeschlagen wurden Verfahren, in welchem Wechselgeld unbar bzw. bargeldlos, also nicht in Form von Bargeld, ausgegeben wird. Es sind beispielsweise Lösungen bekannt, in welchen für jeden Kunden ein Wechselgeldkonto verwaltet wird. Der aktuelle Wechselgeldbetrag wird dem Konto des Kunden gutgeschrieben.

Ebenfalls bekannt ist es, eine Kundenkarte zum Speichern von Wechselgeld zu verwenden. Beispielsweise in US 2006/0010068 A1 wird Wechselgeld in der Höhe des Wechselgeldbetrages an eine Chip- oder Magnetstreifenkarte des Kunden übertragen.

Der Erfindung liegt die Aufgabe zugrunde, ein vereinfachtes Zahlungsverfahren mit Wechselgeld anzugeben, welches insbesondere flexibel und/oder händlerübergreifend einsetzbar ist.

Die Erfindung ist im unabhängigen Anspruch definiert. Die abhängigen Ansprüche betreffen bevorzugte Weiterbildungen der Erfindung.

Das Zahlungsverfahren mit Wechselgeld umfasst in der Zahlungseinheit ein Berechnen eines Wechselgeldbetrags ausgehend von einem Zahlungsbetrag und einem Einzahlbetrag. Wechselgeld, welches dem Wechselgeldbetrag entspricht, wird von der Zahlungseinheit an eine Wechselgeldspeichereinheit gesendet. Vorliegend ist die Wechselgeldspeichereinheit eine Münze oder Banknote, die einen Wechselgeldspeicher umfasst.

Das Wechselgeld entsprechend dem Wechselgeldbetrag wird also nicht wie bisher entweder physisch in Form von Bargeld oder bargeldlos ausgegeben. Sowohl für den Zahlenden als auch für die Zahlungseinheit sind Banknoten oder Münzen keine neuen oder zusätzlichen Komponenten. Zudem lässt sich die Banknote oder die Münze auch direkt weitergeben (beispielsweise von dem Zahlenden an einen Dritten), insbesondere da sie nicht personenbezogen ist. Die direkte Weitergabe kann manuell erfolgen, ist also besonders einfach möglich, beispielsweise da hierfür keine Infrastruktur, wie Schreib- oder Lesegeräte, notwendig ist.

Die Wechselgeldspeichereinheit ist Bargeld in Form der Münze oder der Banknote mit Wechselgeldspeicher. Das Wechselgeld wird also an Bargeld in Form der Banknote bzw. Münze gesendet.

Als Bargeld ist die Banknote bzw. Münze ein gesetzliches Zahlungsmittel und/oder weist einen Nennwert auf. Der Nennwert ist in der Regel größer als Null. Da die Banknote bzw. Münze einen positiven Nennwert (>0) hat und nun zusätzlich das Wechselgeld speichert, entsteht eine besonders vorteilhafte Lösung. In einer alternativen Ausgestaltung hat die Banknote oder Münze einen Nennwert von Null. Die Banknote oder Münze mit Wechselgeldspeicher ist dann zwar ein gesetzliches Zahlungsmittel, hat aber den Nennwert Null. Optional kann diese Banknote bzw. Münze mit Wechselgeldspeicher und Nennwert Null eingerichtet sein, um stets einen Minimalgeldbetrag, wie 1; 0,10; 0,01 oder sogar 0,001 Euro, in dem Wechselgeldspeicher zu speichern. Die Banknote oder Münze mit Nennwert Null ist besonders einfach erkennbar. Zudem gibt es Verfahrensvarianten einer Zahlung, insbesondere wenn die Banknote bzw. Münze den Besitzer wechselt, in welchen die Verarbeitung durch die alternative Ausgestaltung vereinfacht wird.

In bevorzugten Ausgestaltungen kann Wechselgeld zusätzlich auch in Form von Bargeld ausgegeben werden. Im Folgenden wird von einem Bargeldbetrag gesprochen, wenn ein Geldbetrag als Wechselgeld in Form von Bargeld ausgegeben wird. Dagegen ist der Wechselgeldbetrag der Geldbetrag, der an die Münze oder Banknote mit Wechselgeldspeicher gesendet wird.

Ein Zahlender, in der Regel ein Kunde oder Käufer, zahlt den Einzahlbetrag an der Zahlungseinheit ein, um den Zahlungsbetrag zu begleichen. In der Zahlungseinheit kann ein Differenzbetrag aus Einzahlbetrag minus Zahlungsbetrag berechnet werden. Der Differenzbetrag gibt zunächst das insgesamt auszugebende Wechselgeld an. Der Differenzbetrag, kann nun als Wechselgeld jedoch entweder nur gesendet oder gesendet und in Bargeld ausgegeben werden. Der zu sendende Wechselgeldbetrag wird dann berechnet durch Abziehen des optionalen Bargeldbetrages vom Differenzbetrag. Da der Wechselgeldbetrag gesendet wird, könnte man auch von digitalem Wechselgeld sprechen. In diesem Sinne wird das Wechselgeld mit dem Wechselgeldbetrag als digitales Wechselgeld ausgegeben und nur optional zusätzlich in Form von physischen Wechselgeld (Bargeld) ausgegeben.

In der Zahlungseinheit kann vorzugsweise ein zusätzlich als Wechselgeld auszugebender Bargeldbetrag errechnet werden. Der Bargeldbetrag wird mit Vorteil so berechnet, dass er in Form von (einer oder mehreren) Banknoten ausgegeben werden kann. Der Wechselgeldbetrag wird insbesondere berechnet durch Abziehen des Bargeldbetrages von der Differenz aus Einzahlbetrag und Zahlungsbetrag.

Besonders bevorzugt wird in der Zahlungseinheit anhand eines vorbestimmten Grenzwerts geprüft, ob
- entweder nur der Wechselgeldbetrag an die Wechselgeldspeichereinheit gesendet wird,
- oder der Wechselgeldbetrag an die Wechselgeldspeichereinheit gesendet wird und ein Bargeldbetrag als Wechselgeld auszugeben ist.

Der Grenzwert kann beim Prüfen mit einem Differenzbetrag aus Einzahlbetrag und Zahlungsbetrag verglichen werden. Der Grenzwert kann insbesondere einem Nennwert einer Banknote oder einer Münze entsprechen. Besonders bevorzugt entspricht der Grenzwert dem Nennwert der Wechselgeldeinheit. Als der vorbestimmte Grenzwert kann beispielsweise der Nennwert der niederwertigsten oder einer niederwertigen Banknote (also für Euro: "5" oder "10" von "5; 10; 20; 50; 100; 200") verwendet werden. Die Zahlungseinheit gibt für einen Differenzbetrag unter dem Grenzwert, im Beispiel unter 5 (bzw. 10) Euro, das Wechselgeld nur durch das Senden des Wechselgeldbetrages aus und für einen Differenzbetrag über dem Grenzwert, im Beispiel ab 5 (bzw. 10) Euro aufwärts, sowohl den gesendeten Wechselgeldbetrag als auch als Bargeld aus. Vorzugsweise wird das Bargeld nur in Form von Banknoten ausgegeben. Ist der vorbestimmte Grenzwert der Nennwert einer höherwertigeren Münze (also für Euro: "2" oder "1" von "2; 1; 0,50; 0,20; 0,10; ..."), werden keine Münzen mit Nennwerten unter dem Grenzwert als Wechselgeld verwendet.

Der Grenzwert ist vorzugsweise abhängig von der Zahlung, also ein zahlungsbezogener Grenzwert. Er könnte alternativ theoretisch jedoch auch ein zahlungsunabhängiger Grenzwert sein, der beispielsweise nur von einem Bargeldestand in der Zahlungseinheit abhängt. Als Grenzwert kann beispielsweise ein Soll-Bargeldbestand der Zahlungseinheit dienen. Mit Hilfe eines solchen Grenzwertes kann der Bargeldbestand in der Zahlungseinheit gesteuert werden. Ebenfalls zu erwähnen, ist die weitere Alternative (zu einem Grenzwert), dass in der Zahlungseinheit ein Bargeldbestand stets minimiert wird. So könnte beispielsweise vorrangig vorhandenes Bargeld zurückgegeben werden und/oder erst bei nicht ausreichendem Bargeldbetrag im Bargeldbestand (auch oder insgesamt) ein Wechselgeldbetrag gesendet werden. Die Zahlungseinheit kann auf diesem Weg weiterhin beliebig Bargeld annehmen. Durch die Minimierung des Bargeldbestandes einer Zahlungseinheit werden dennoch Kosten eingespart.

Besonders bevorzugt wird in dem Verfahren der Einzahlbetrag mit Bargeld, insbesondere nur in Form von einer oder mehreren Banknoten, einbezahlt.

Da Banknoten und/oder Münzen mit Wechselgeldspeicher ebenfalls als Bargeld bei der Einzahlung und/oder bei der Ausgabe des Bargeldbetrages eingesetzt werden können, ergeben sich weitere, vorteilhafte Varianten.

In einer ersten Variante stellt die Zahlungseinheit die Wechselgeldspeichereinheit bereit, wobei die auszugebende Wechselgeldspeichereinheit das gesendete Wechselgeld als Wechselgeldbetrag umfasst und den Nennwert aufweist, der zumindest einen Teil des Bargeldbetrages oder den ganzen Bargeldbetrag bildet. Die Zahlungseinheit kann ausgehend von dem Bargeldbetrag aus seinen Münzen und/oder Banknoten mit Wechselgeldspeicher eine Münze bzw. Banknote mit Wechselgeldspeicher mit geeignetem Nennwert auswählen. Die Auswahl kann einem Bediener der Zahlungseinheit angezeigt werden, falls die ausgewählte Münze bzw. Banknote mit Wechselgeldspeicher nicht automatisch weiter verarbeitet wird. Haben dagegen im Zahlungssystem nur Banknoten (oder Münzen) eines dedizierten Nennwerts Wechselgeldspeicher, entfällt der Auswahl-Schritt.

In einer zweiten Variante wird die Wechselgeldspeichereinheit als Teil der Einzahlung bereitgestellt. Die Wechselgeldspeichereinheit ist entsprechend eine eingezahlte Münze bzw. Banknote mit Wechselgeldspeicher. Vorzugsweise kann in einer Berechnung des Einzahlbetrages entweder der Einzahlbetrag unabhängig von einem Nennwert der eingezahlten Wechselgeldspeichereinheit sein oder der Nennwert der eingezahlten Wechselgeldspeichereinheit zumindest einen Teil des Einzahlbetrages bilden. Die erste Alternative kann vorteilhaft sein, beispielsweise wenn die Zahlungseinheit die auszugebende Wechselgeldspeichereinheit aus mehreren eingezahlten Wechselgeldspeichereinheiten auswählt. Die Auswahl kann optional wiederum einem Bediener der Zahlungseinheit angezeigt werden. Die zweite Alternative ist allgemein flexibler und teils besser für eine automatische Erfassung des Einzahlbetrages geeignet. Alternativ oder zusätzlich kann ein bereits in der eingezahlten Wechselgeldspeichereinheit vorhandener Geldbetrag zumindest einen Teil des Einzahlbetrages bilden.

In einer dritten Variante wird die Wechselgeldspeichereinheit unabhängig von der Zahlungseinheit bereitgestellt, sie verbleibt also insbesondere im Verfügungsbereich des Zahlenden. Beispielsweise kann der Zahlende seine Münze bzw. Banknote, die er als Wechselgeldspeicher bereitstellt, in der Hand oder seinem Geldbeutel behalten, in eine Aufnahme einer ihm (temporär oder dauerhaft) zugeordneten Einheit, wie Einkaufswagen, Einkaufskorb oder Tisch, einsetzen oder temporär auf eine kontaktlose Schnittstelle der Zahlungseinheit legen. Optional kann die Zahlungseinheit einen in der unabhängig bereitgestellten Wechselgeldspeichereinheit bereits vorhandenen Geldbetrag empfangen, wobei der der empfangene Geldbetrag einen Teil des Einzahlbetrages bildet.

In jeder der Varianten oder alternativ hierzu können eine oder mehrere weitere Münzen und/oder Banknoten mit Wechselgeldspeicher, welche einen vorhandenen Geldbetrag speichern, eingezahlt werden. In der Berechnung des Einzahlbetrages bilden der Nennwert und der vorhandene Geldbetrag Teile des Einzahlbetrages.

Der Wechselgeldspeicher der Münze bzw. Banknote, welche das Wechselgeld empfängt, speichert den empfangenen Wechselgeldbetrag.

Zudem kann der Wechselgeldspeicher in Ausgestaltungen das Wechselgeld in getrennten Datensätzen verwalten (Beispiele mit 3 Datensätzen: 1,51; 0,49 und 0,50 Euro oder 2 Euro, 1 Euro, 2 Pfund) oder in einem Datensatz für den insgesamt gespeicherten Geldbetrag - nur gegebenfalls pro Währung - (Beispiel für Summe: 2,50 Euro oder 2 Pfund) verwalten. Es kann also insbesondere entweder nur ein Datensatz pro Währung oder nur ein Datensatz für den insgesamt gespeicherten Geldbetrag, in einer vorzugsweise vorgegebenen oder umschaltbaren Währung, vorliegen. Der Datensatz oder die Datensätze können optional eine Währungsangabe (Euro, elektronischer Euro, Pfund, Dollar ...) umfassen oder eine zugeordnete Währungsangabe aufweisen. Neu empfangenes Wechselgeld wird, beispielsweise im Fall getrennter Datensätze und/oder im Fall einer weiteren Währung, als weiterer Datensatz im Speicher hinzugefügt. Analog wird ein, beispielsweise an die Zahlungseinheit, gesendeter Datensatz aus dem Speicher gelöscht, wenn er getrennt verwaltet wird. Im Fall eines Datensatzes, der einen Gesamt-Geldbetrag-insbesondere in einer Währung oder der einzigen Währung - enthält, wird der empfangene Wechselgeldbetrag zu dem bereits gespeicherten Gesamt- Geldbetrag hinzugefügt. Analog wird dann der Geldbetrag von gesendetem Wechselgeld vom Gesamt-Geldbetrag abgezogen.

Weiterhin kann der Wechselgeldspeicher in alternativen oder ergänzenden Ausgestaltungen den empfangenen Wechselgeldbetrag und/oder einen insgesamt gespeicherten Geldbetrag anzeigen. Beispielsweise zeigt eine Anzeige des Wechselgeldspeichers den aktuellen Gesamt-Geldbetrag an. Optional kann nach einem Empfangen (und/ oder einem Senden) von Wechselgeld für einen vorbestimmten Zeitraum, wie 3 -10 Sekunden, den empfangenen (oder gesendeten) Geldbetrag anzeigen. Alternativ sind natürlich auch größere Anzeigen (beispielsweise zur gleichzeitigen Anzeige mehrerer Geldbeträge) oder vom Nutzer umschaltbare Anzeigen einsetzbar (zur Umschaltung des angezeigten Inhalts). Bevorzugt zeigt die Anzeige zusätzlich zu dem Geldbetrag - in allen genannten Varianten - auch die Währung an.

Sofern nur Münzen oder Banknoten eines einzigen dedizierten Nennwertes oder dedizierter Nennwerte einen Wechselgeldspeicher aufweisen, ergeben sich verschiedene Vorteile. Beispielsweise könnten nur 10 Euro-Banknoten (und/ oder 2 Euro-Münzen) den Wechselgeldspeicher umfassen. Für den Zahlenden und/oder die Zahlungseinheit ist die Münze oder Banknote mit Wechselgeldspeicher (bzw. sind die Banknoten oder Münzen) einfacher erkennbar. Insbesondere muss die Zahlungseinheit bei eingezahltem Bargeld nur die Münzen bzw. Banknoten mit dem dedizierten Nennwert auf gespeichertes Wechselgeld prüfen.

Der Wechselgeldspeicher der Münze bzw. Banknote umfasst vorzugsweise: einen Speicherbereich für Wechselgeld; einen Prozessor; eine Anzeige zum Anzeigen eines gespeicherten und/oder empfangenen Geldbetrages; und/oder eine kontaktlose Schnittstelle. Als kontaktlose Schnittstelle eignet sich insbesondere eine induktiv gekoppelte Schnittstelle, wie NFC- oder RFID-Schnittstelle, eine Bluetooth-Schnittstelle, insbesondere Bluetooth Low Energy, oder auch eine kapazitiv gekoppelte Schnittstelle. Der Wechselgeldspeicher kann vorzugsweise eingerichtet sein, um kryptographische Sicherungsdaten zu erzeugen oder zu prüfen. Sowohl für Banknoten als auch für Münzen sind entsprechende integrierte Komponenten für sich genommen bekannt.

Dem Wechselgeldspeicher der Münze oder Banknote ist in besonders bevorzugten Ausgestaltungen ein Ablaufdatum zugeordnet. Das Ablaufdatum liegt vorteilhaft bei 2 bis 5 Jahren nach Herstellung und/oder initialer Ausgabe der Münze oder Banknote. Das Ablaufdatum kann auf dem Wechselgeldspeicher gespeichert sein, beispielsweise direkt als eigenständiges Datenelement oder indirekt als Datenelement eines Zertifikats. Das Ablaufdatum kann alternativ oder zusätzlich als lesbares Datum (wie: Jahr oder Monat/Jahr oder Tag/Monat/Jahr) auf der Banknote oder Münze enthalten sein oder als Farbkodierung, insbesondere mit einer Farbe pro Jahr, enthalten sein (beispielsweise: Ablauf Anfang 2022 = Farbe 1; Ablauf Anfang 2023 = Farbe 2, ..., wie es analog bereits im Bereich von TÜV-Plaketten verwendet wird).

Die Münze oder Banknote ist nach Erreichen des Ablaufdatums als Zahlungsmittel nur noch beschränkt verwendbar. Da das Ablaufdatum nur dem Geldwechselspeicher zugeordnet ist, kann die Münze oder Banknote als Zahlungsmittel weiter mit ihrem Nennwert verwendet werden. Nach Erreichen des Ablaufdatums soll der Wechselgeldspeicher keine weiteren (empfangenen) Geldbeträge mehr speichern. In Ausgestaltungen kann die Banknote oder Münze nur noch mit ihren Nennwert verwendet werden. In anderen, den bevorzugten, Ausgestaltungen kann der Wechselgeldspeicher auch nach Erreichen des Ablaufdatums einen bereits gespeicherten Geldbetrag weiterhin senden. Der bereits gespeicherte Geldbetrag kann also beispielsweise weiterhin im Rahmen einer Zahlung eingezahlt werden.

Bei der Zahlungseinheit kann es sich beispielsweise um eine Kasse, insbesondere um einen Kassenautomaten oder um eine manuell betriebene Kasse, aber auch um ein mobiles oder stationäres Zahlungsterminal handeln. Zahlungsterminals können beispielsweise - kontaktlos oder kontaktbehaftet - den Einzahlbetrag bargeldlos empfangen, insbesondere von einer Zahlungsverkehrskarte oder einem mobilen Endgerät empfangen. Ein Zahlungsterminal für bargeldlose Zahlungen kann vorliegend jedoch auch nach einer Barzahlung des Einzahlbetrages verwendet werden. Im Falle eines Kassenautomaten oder eines stationäre Zahlungsterminals kann Bargeld als Teil des Wechselgeldes dem Kunden direkt über eine Öffnung ausgegeben werden. Im Falle einer manuell betriebenen Kasse oder eines mobilen Zahlungsterminals kann der Betrag, der in Bargeld ausgegeben wird, einem Kassierer bzw. Bediener des Zahlungsterminals auf einem Monitor angezeigt werden, sodass dieser die Ausgabe des Bargelds übernimmt.

Die Zahlungseinheit umfasst in Ausgestaltungen zur Ausführung des vorliegenden Verfahrens einen Prozessor sowie eine Schnittstelle zur Kommunikation mit dem Wechselgeldspeicher der Banknote bzw. Münze. Ergänzend kann sie eine Anzeige zum Anzeigen eines in Bargeld auszugebenden Wechselgeldbetrages umfassen. Alternativ oder ergänzend umfasst sie (als Kasse) einen Aufnahmebereich für Banknoten, in dem eingezahlte Banknoten und/oder auszugebende Banknoten vorhanden sind.

Besonders bevorzugt ist die Münze oder Banknote beim Senden des Wechselgeldes in eine Aufnahme einer Einheit eingesetzt. Vorzugsweise wird sie temporär eingesetzt, also vor dem Senden des Wechselgeldes eingesetzt und danach wieder aus der Aufnahme entnommen. Die Einheit kann eine mobile Einheit oder Warentransporteinheit, wie Einkaufkorb, Einkaufswagen ..., sein. Die Einheit mit Aufnahme kann alternativ jedoch auch eine stationäre Einheit, wie Tisch oder Serviceterminal, sein.

Insbesondere kann die Einheit mit Aufnahme durch Einsetzen der Münze oder Banknote mit Wechselgeldspeicher in die Aufnahme aktiviert, insbesondere entriegelt, werden (Beispiele: Münze entriegelt Einkaufswagen oder Banknote aktiviert Elemente eines Tisches/Terminals).

Die Aufnahme kann vorteilhafterweise derart gestaltet sein, dass eine Anzeige der eingesetzten Münze (oder Banknote) sichtbar bleibt. Die Aufnahme kann - zumindest im Bereich der Anzeige der eingesetzten Münze (oder Banknote) - beispielsweise nach oben offen ausgestaltet sein oder eine transparente Abdeckung umfassen. Ein von der Münze oder Banknote angezeigter Geldbetrag bleibt somit auch im eingesetzten Zustand der Münze oder Banknote sichtbar. Besonders bevorzugt erkennt die Aufnahme, beispielsweise mit einem Sensor oder mechanisch, ob die Münze oder Banknote seitenverkehrt, also mit der Anzeige nach unten, eingesetzt ist. Nur optional signalisiert die Aufnahme den erkannten Fehlerzustand, beispielsweise mittels einer LED, dem Nutzer.

Die Einheit mit Aufnahme kann eine erste Schnittstelle zur Kommunikation mit dem Wechselgeldspeicher der Münze oder Banknote umfassen und eine zweite Schnittstelle - mit höherer Reichweite als die erste Schnittstelle - zur Kommunikation mit der Zahlungseinheit umfassen. Beispielsweise kann die erste Schnittstelle eine Bluetooth- oder WLAN-Schnittstelle sein und die zweite Schnittstelle eine kontaktlose Schnittstelle mit geringer Reichweite, wie NFC- oder RFID-Schnittstelle (mit Reichweiten im cm-Bereich).

Weiter alternativ oder ergänzend umfasst die Einheit mit Aufnahme eine eigenständige Energieversorgung, wie eine, vorzugsweise wieder aufladbare, Batterie oder eine Solarzelle.

Ein Zahlungssystem, das zur Ausführung des vorliegenden Verfahrens eingerichtet ist, umfasst eine Zahlungseinheit und mindestens eine Münze oder Banknote mit Wechselgeldspeicher. Die Zahlungseinheit ist insbesondere angepasst um die entsprechenden Schritte des Berechnens des Wechselgeldbetrages und des Sendens des Wechselgeldes auszuführen. Die Zahlungseinheit kann ferner eine Einheit mit Aufnahme für die Banknote oder Münze umfassen, wie sie bereits näher beschrieben wurde. In der Regel wird es in dem Zahlungssystem eine Vielzahl von Zahlungseinheiten eines oder mehrerer Inhaber, und/oder eine Vielzahl von Münzen oder Banknoten mit Wechselgeldspeicher geben.

Als gesetzliches Zahlungsmittel wird hier rein exemplarisch der EURO verwendet, ohne dass damit eine Einschränkung verbunden sei. Am Beispiel des EURO kann der vorbestimmte Grenzwert in Ausführungsformen beispielsweise auf 5 € (um Münzgeld zu vermeiden), auf 1 € oder 2 € (um Kleingeld zu vermeiden) oder auf 0,1 € (um Kupfergeld zu vermeiden) gesetzt werden.

Zur Veranschaulichung wird das Zahlungsverfahren nachfolgend an einem Beispiel erläutert: Beträgt ein Kaufbetrag 66,56 € (hier der Zahlungsbetrag) und ein Kunde bezahlt mit einer 100 €-Banknote (Einzahlbetrag = 100€), erhält er beispielsweise eine 10 €- und eine 20 €-Banknote zurück und der Betrag von 3,44 € wird als Wechselgeld an die Münze (oder Banknote) mit Wechselgeldspeicher gesendet. Im vorliegenden Fall kann sich der Wechselgeldspeicher beispielsweise auf der 10 €- oder der 20 €-Banknote befinden. Der Kunde kann dann beispielsweise eine 10 €-Banknote und eine "23,44 €-Banknote" zurückerhalten, da in dem Wechselgeldspeicher der 20 €-Banknote das Wechselgeld in Höhe von 3,44 € gespeichert ist.

Nun besteht in Ausführungsformen die Möglichkeit, dass der Kunde einen weiteren Zahlungsbetrag von beispielsweise 1,21 € mit der erhaltenen "23,44 €-Banknote" bezahlt, also mit der 20 €-Banknote, die sich in seinem Besitz befindet und die einen Geldbetrag in Höhe von 3,44€ speichert. Wiederum wird aus dem Zahlungsbetrag und dem Einzahlbetrag - also in diesem Fall die auf dem Wechselgeldspeicher gespeicherten 3,44 € plus die gar nicht benötigten 20 € - das Wechselgeld berechnet. Von der Differenz in Höhe von 22,23 € wird der Nennwert der zurückzugebenden Banknote, also hier 20€, abgezogen. Der Wechselgeldbetrag beträgt demnach 2,23 €, da der nicht in bar zurückzuzahlende Geldbetrag von 2,23 € kleiner ist als der vorbestimmte Grenzwert in Höhe von 5 € ist. Das Wechselgeld in Höhe von 2,23€ wird an den Wechselgeldspeicher gesendet und dort gespeichert. Entweder wird dazu zunächst der gespeicherte Geldbetrag empfangen und dann der Wechselgeldbetrag gesendet oder es wird (im Sinne eines Guthabens) der gespeicherte Geldbetrag direkt auf den neuen (Gesamt-)Geldbetrag gesetzt. Die "23,44 €-Banknote" wurde damit zur "22,23 €-Banknote".

Der Gesamt-Geldbetrag, der in dem Wechselgeldspeicher gespeichert werden kann, wird vorzugsweise begrenzt, insbesondere begrenzt auf einen vorbestimmten Maximalwert (wie 9,99 Euro oder 15 Euro) oder auf einen dem Nennwert entsprechenden Maximalwert (wie 5 Euro-Banknote mit maximal speicherbaren 5 Euro). Eine bevorzugte Limitierung des Gesamt-Geldbetrages auf dem Wechselgeldspeicher kann dafür sorgen, dass auf Schutzmechanismen (z.B. PIN) oder Prozesse zur Wiederherstellung des Guthabens verzichtet werden kann. Zudem ist ein betrügerischer Angriff wegen der Kleinbeträge unattraktiv und damit weniger zu befürchten.

Alternativ oder zusätzlich zu einer Begrenzung kann für den Gesamt-Geldbetrag, der in dem Wechselgeldspeicher einer Münze oder Banknote gespeichert werden soll, eine Interaktions-Schwelle vorgesehen sein. Wird die Interaktions-Schwelle erreicht (für einen Maximalwert insbesondere überschritten oder für einen Minimalwert insbesondere unterschritten), erfolgt eine Interaktion mit dem Zahlenden. Der Zahlende wird beispielsweise informiert ("Schwelle X erreicht"), vor eine Auswahl gestellt ("Option 1, Option 2 ... auswählen") oder um Bestätigung - trotz erreichter Schwelle - gebeten ("Fortfahren oder Abbruch"). Vorzugsweise interagiert die Zahlungseinheit oder die Banknote bzw. Münze mit Wechselgeldspeicher mit dem Zahlenden.

Die Interaktions-Schwelle ist bevorzugt vorbestimmt, kann alternativ jedoch vom Zahlenden für seine Banknote oder Münze einstellbar sein. Ein Maximalwert ist in der Regel vorbestimmt, also nicht änderbar. Theoretisch denkbar ist es jedoch, auch einen Maximalwert für den Zahlenden einstellbar zu gestalten. Beispielsweise kann der Zahlende die Informations-Schwelle für seine 2 Euro-Münze mit Wechselgeldspeicher auf 2 oder 5 Euro setzen, wobei die 2-Euro-Münze keinen vorbestimmten Maximalwert haben muss, aber beispielsweise auf einen vorbestimmten Maximalwert von 10 Euro begrenzt ist. Mit Hilfe einer Bestätigungs-Schwelle kann erreicht werden, dass die Schwelle nicht ohne die bestätigende Interaktion des Zahlenden erreicht wird.

Die Münze oder Banknote mit Wechselgeldspeicher wird bevorzugt initial von einer Bank oder von der Zahlungseinheit an Zahlende bzw. Nutzer ausgegeben. Wird die Münze oder Banknote mit Wechselgeldspeicher direkt von einer Bank erhalten, ist der gespeicherte Geldbetrag bevorzugt Null. Nur alternativ könnte bei der initialen Ausgabe ein initialer Geldbetrag gespeichert sein. Wird die Münze mit Wechselgeldspeicher oder Banknote mit Wechselgeldspeicher initial von der Zahlungseinheit ausgegeben, enthält sie vorzugsweise bereits den Wechselgeldbetrag. Nur alternativ wird die Münze oder Banknote mit Wechselgeldspeicher an der Zahlungseinheit initial ohne gespeicherten Geldbetrag ausgegeben.

Die Münze mit Wechselgeldspeicher oder Banknote mit Wechselgeldspeicher könnte in einer 1-zu-1 Beziehung einem Nutzer (oder Zahlenden) zugeordnet sein. Jeder Nutzer des Zahlungssystems hat dann nur eine einzige Wechselgeldeinheit, die zugleich gesetzliches Zahlungsmittel ist. Bevorzugt besteht aber eine 1-zu-n Beziehung zwischen Nutzer und Münze mit Wechselgeldspeicher oder Banknote mit Wechselgeldspeicher. Nutzer können mehrere entsprechende Münzen oder Banknoten im Besitz halten. Besonders bevorzugt haben nur alle Münzen oder Banknoten eines bestimmten Nennwertes (Denomination) einen Wechselgeldspeicher, besonders bevorzugt alle Banknoten mit dem kleinsten Nennwert. Münzen oder Banknoten anderer Nennwerte habe in dieser Ausgestaltung keine Wechselgeldspeicher.

In besonders vorteilhaften Ausgestaltungen erfolgt vor dem Senden des Wechselgeldes von der Zahlungseinheit an die Banknote oder Münze ein selektiver Aufbau einer kontaktlosen Kommunikation zwischen der Zahlungseinheit und entweder der Banknote bzw. Münze oder der Aufnahme mit eingesetzter Banknote bzw. Münze. Durch den selektiven Aufbau der Kommunikationsverbindung wird verhindert, dass das Wechselgeld an weitere potentielle Kommunikationspartner gesendet wird - wie andere Banknoten oder Münzen mit Wechselgeldspeicher, andere Einheiten mit Aufnahme oder Mobilgeräte -, die sich ebenfalls im Kommunikationsbereich der Zahlungseinheit befinden. Die kontaktlose Kommunikation wird selektiv mit nur einer bestimmten Münze oder Banknote bzw. Einheit mit Aufnahme im Kommunikationsbereich der Zahlungseinheit aufgebaut. Für Bluetooth (oder auch BLE) als kontaktlose Schnittstelle ist zu diesem Zweck ein sogenanntes Pairing bekannt. In ähnlicher Form kann beispielsweise eine eindeutige Seriennummer, Zahlungsnummer oder Zufallszahl im Rahmen des Kommunikationsaufbaus verwendet werden, welche vorab durch die Zahlungseinheit von der Münze oder Banknote zu erfassen oder zu empfangen ist. Eine solche Nummer kann beispielsweise auch - für die Zahlungseinheit - auf der Anzeige des Wechselgeldspeichers angezeigt werden.

Die Banknote oder Münze mit Wechselgeldspeicher wird das von der Zahlungseinheit gesendete Wechselgeld empfangen und speichern. Im Folgenden wird nun auf vorteilhafte Optionen eingegangen, welche Einheiten gespeichertes Geld von dem Wechselgeldspeicher empfangen können und welche anderen Einheiten ebenfalls Geld an die Banknote oder Münze senden können.

In ersten, besonders vorteilhaften Ausgestaltungen ist die Banknote oder Münze bzw. dessen Wechselgeldspeicher so eingerichtet, dass
- beliebige Einheiten Geld an die Banknote oder Münze senden können, welches in dem Wechselgeldspeicher gespeichert wird, und
- der Wechselgeldspeicher bereits gespeichertes Geld nur an Einheiten mit Empfangsberechtigung sendet.

Einheiten mit Empfangsberechtigung können insbesondere ausgewählt sein aus einer, mehreren oder allen der folgenden Einheiten: Zahlungseinheiten; Einheiten, inklusive mobilen oder stationären Geräten, Servern oder Serverinstanzen, von Banken inklusive Zentralbanken; oder Einheiten, inklusive mobilen oder stationären Geräten, Servern oder Serverinstanzen, von kommerziellen Zahlungsdienstleistern.

In zweiten, vorteilhaften Ausgestaltungen ist die Banknote oder Münze bzw. dessen Wechselgeldspeicher so eingerichtet, dass
- der Wechselgeldspeicher nur Geld von Einheiten mit Sendeberechtigung speichert, und
- der Wechselgeldspeicher bereits gespeichertes Geld nur an Einheiten mit Empfangsberechtigung sendet.

In diesen Ausgestaltungen gibt es also Zahlungseinheiten mit Sendeberechtigung. Einheiten mit Sendeberechtigung können darüber hinaus ausgewählt sein aus einer, mehreren oder allen der folgenden Einheiten: Zahlungseinheiten; Benutzereinheiten, inklusive mobilen oder stationären Endgeräten oder Serverinstanzen (für einen Benutzer ausgeführter Serverdienst); Einheiten, inklusive mobilen oder stationären Geräten, Servern oder Serverinstanzen, von Banken inklusive Zentralbanken; oder Einheiten, inklusive mobilen oder stationären Geräten, Servern oder Serverinstanzen, von kommerziellen Zahlungsdienstleistern. Zu Einheiten mit Empfangsberechtigung gilt das oben bereits Genannte. Grundsätzlich können alle Einheiten mit Empfangsberechtigung auch die Sendeberechtigung aufweisen. In der Regel gibt es jedoch Einheiten, die nur die Sendeberechtigung haben, aber keine Empfangsberechtigung haben; insbesondere können das Zahlungseinheiten und/oder Einheiten von Zahlungsdienstleistern sein. Vorzugsweise haben alle Einheiten mit Empfangsberechtigung auch Sendeberechtigung, so dass in dem Wechselgeldspeicher nur die Sendeberechtigung zu prüfen ist.

Die Berechtigung kann jeweils auf unterschiedlichen Wegen nachgewiesen werden. Berechtigungsnachweise können insbesondere separat als Datenelement (wie Zertifikat(e) oder Signatur) und/oder dynamisch mittels Authentisierung und/oder als Teil des zu speichernden Datensatzes (Zertifikat, Signatur, datenabhängiger Prüfwert ...) von der Einheit bereitgestellt werden.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. In den Figuren zeigen:
- Fig. 1: ein Blockdiagramm eines Zahlungsverfahrens,
- Fig. 2: ein Blockdiagramm einer Variante eines Zahlungsverfahrens,
- Fig. 3: ein Blockdiagramm einer weiteren Variante eines Zahlungsverfahrens,
- Fig. 4: ein Ablaufdiagramm für Ausgestaltungen des Verfahrens,
- Fig. 5: eine Banknote mit Wechselgeldspeicher,
- Fig. 6: eine Münze mit Wechselgeldspeicher, und

- Fig. 7: eine Münze mit Wechselgeldspeicher in einer Aufnahme einer weiteren Einheit.

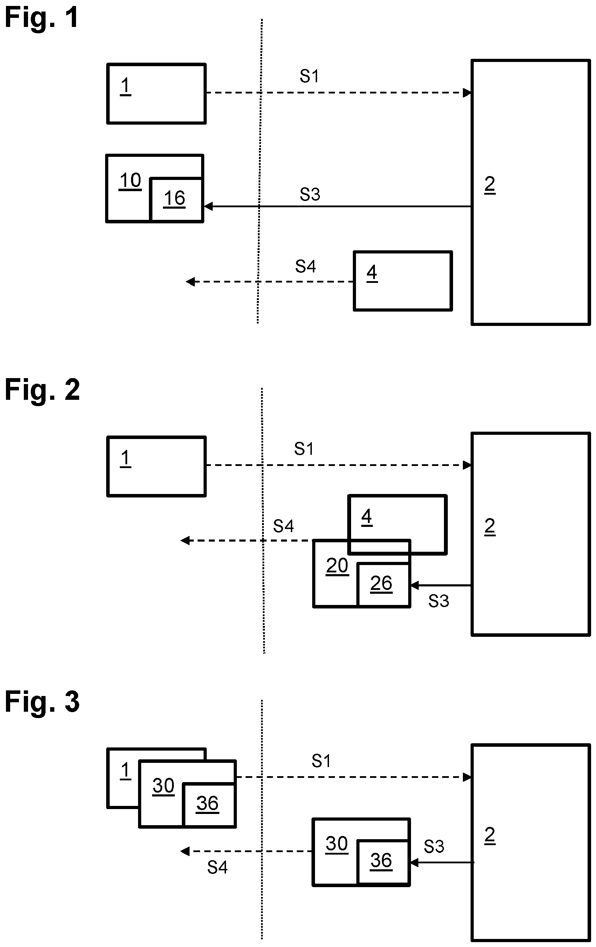

In Fig. 1 wird ein Zahlungsverfahren mit einer Zahlungseinheit 2 dargestellt, welche eine stationäre Kasse oder ein mobiles Zahlungsterminal sein könnte. In der Figur ist mit einer gestrichelten Linie die Grenze zum Zahlenden dargestellt. Der Zahlende besitzt sowohl Bargeld 1, insbesondere herkömmliches Bargeld, als auch eine Banknote (oder Münze) 10 mit Wechselgeldspeicher 16.

Im Folgenden wird zunächst von einer Kasse als Zahlungseinheit 2 ausgegangen, in welcher Bargeld, vorzugsweise ausschließlich in Form von Banknoten, vorliegt. Die Zahlungseinheit 2 wird als Kasse entsprechend einen Bereitstellungsbereich für Banknoten umfassen. Ebenso kann die Zahlungseinheit 2 eine Eingabekomponente, wie Tastatur, zur Eingabe eines Einzahlbetrages umfassen. Die Zahlungseinheit kann ferner eine Anzeige zum Anzeigen von Beträgen, wie Zahlungsbetrag, Einzahlbetrag oder Wechselgeldbetrag, umfassen. Optional weist die Zahlungseinheit eine Ein- und/oder Ausgabekomponenten auf, um Bargeld automatisch aufzunehmen und/oder abzugeben, beispielsweise in Form eines Banknotenverarbeitungsmoduls.

In Schritt S1 erfolgt eine Einzahlung, da ein Zahlungsbetrag zu zahlen ist, und ein zugehöriger Einzahlbetrag wird bestimmt. Die Einzahlung erfolgt mittels Bargeld 1, also in Form einer oder mehrerer Banknoten (und/ oder nur optional Münzen). Der Nennwert der eingezahlten Banknote bzw. die Summe der Nennwerte der eingezahlten Banknoten ergibt den Einzahlbetrag. Der Einzahlbetrag der Einzahlung kann in der Zahlungseinheit 2 automatisch berechnet werden, beispielsweise im Banknotenverarbeitungsmodul, oder eingegeben werden, beispielsweise mittels einer Tastatur der Zahlungseinheit 2.

Die zuvor genannte Berechnungsangabe für den Einzahlbetrag ist anwendbar sofern nur herkömmliches Bargeld eingezahlt wird bzw. ebenfalls sofern nur Bargeld mit leerem Wechselgeldspeicher eingezahlt wird. Bereits vorhandene Geldbeträge in einem Wechselgeldspeicher einer eingezahlten Banknote oder Münze können - wie später genauer beschrieben wird - jedoch ebenfalls als Teil des Einzahlbetrages berücksichtigt werden.

Die Zahlungseinheit 2 berechnet nun eine Differenz aus dem Einzahlbetrag und dem Zahlungsbetrag. Der berechnete Differenzbetrag ist ein an den Zahlenden auszugebender Wechselgeldbetrag. In Schritt S3 sendet die Zahlungseinheit 2 Wechselgeld an die Banknote (oder Münze) 10 mit Wechselgeldspeicher 16 des Zahlenden, wobei das gesendete Wechselgeld dem Wechselgeldbetrag entspricht. Das Wechselgeld wird also vorliegend - zumindest teilweise - in digitaler Form übertragen. In dem Wechselgeldspeicher 16 der Banknote (oder Münze) 10 wird das empfangene Wechselgeld gespeichert.

Die Zahlungseinheit 2 und/oder die Banknote (oder Münze) 10 umfassen eine Schnittstelle, wie NFC-, UHF- oder Bluetooth-Schnittstelle, über welche das Wechselgeld gesendet wird. Die Banknote (oder Münze) 10 bleibt während des Zahlungsverfahrens im Besitz des Zahlenden. Sie wird also beispielsweise nur temporär auf eine NFC-Schnittstelle der Zahlungseinheit aufgelegt, verbleibt in der Hand des Zahlenden oder verbleibt - beispielsweise als Münze - in einer Aufnahme einer Einheit, wie Einkaufswagen oder Mobilfunkgerät, des Zahlenden.

Der Zahlende hat initial beispielsweise eine Banknote 1 mit einem Nennwert von 20 Euro und eine Banknote 10 mit leerem Wechselgeldspeicher 16 und einem Nennwert von 5 Euro. Wenn die Differenzbildung einen Wechselgeldbetrag in Höhe von 3,78 Euro ergeben hat, speichert der Wechselgeldspeicher 16 nach Schritt S3 das empfangene Wechselgeld in Höhe von 3,78 Euro.

In Fig. 1 ist mit Schritt S4 weiterhin die Option angedeutet, dass - zusätzlich zu dem Senden von Wechselgeld - Bargeld 4 der Zahlungseinheit 2 als Wechselgeld ausgegeben werden kann.

Wird ein Grenzwert für eine Bargeldausgabe auf den Nennwert der niederwertigsten Banknote festgelegt, also für Euro beispielsweise auf 5 Euro festgelegt, kommt die Zahlungseinheit 2 vollständig ohne Münzen aus. Ist der Differenzbetrag größer als der Grenzwert, 5 Euro, wird eine Banknote als Wechselgeld ausgegeben. Für einen Differenzbetrag von 13,78 Euro wird beispielsweise zusätzlich zu dem zu sendenden Wechselgeldbetrag in Höhe von 3,78 Euro eine Banknote mit dem Nennwert von 10 Euro als Wechselgeld ausgegeben. Wäre der Grenzwert in der Zahlungseinheit 2 dagegen beispielsweise auf 2 Euro gesetzt, würde die Zahlungseinheit in Schritt S4 12 Euro (10 Euro Banknote und 2 Euro Münze) in bar auszahlen und in Schritt S3 einen Wechselgeldbetrag in Höhe von 1,78 Euro senden. Die Reihenfolge der Schritte S3 und S4 ist beliebig, also auch austauschbar.

Der Wechselgeldspeicher 16 der Banknote (oder Münze) 10 kann initial natürlich bereits Wechselgeld enthalten. In einer einfachen Variante speichert der Wechselgeldspeicher das empfangene Wechselgeld jeweils als separaten Datensatz ab. Er speichert also beispielsweise zusätzlich zu einem oder mehreren bereits vorhandenen Datensätzen, welche (jeweils) einem Betrag entsprechen, das empfangene Wechselgeld als weiteren Datensatz ab. Alternativ (oder zusätzlich) kann der Wechselgeldspeicher einen Gesamt-Geldbetrag verwalten oder speichern. Ein Datenelement gibt entsprechend den insgesamt gespeicherten Wechselgeldbetrag an. Das empfangene Wechselgeld erhöht den bereits gespeicherten Gesamt-Geldbetrag um den Wechselgeldbetrag. Anzumerken ist, dass der neue Gesamt-Geldbetrag bzw. das entsprechende Datenelement in dem Wechselgeldspeicher 16 oder in der Zahlungseinheit 2 berechnet werden kann.

Die Beträge werden in den vorliegenden Beispielen in Euro angegeben, ohne dass hiermit eine technische Beschränkung verbunden wäre. Die Lösungen können für jede andere Währung analog eingesetzt werden. Für den Euro ist aktuell die 5-Euro-Banknote die Banknote mit dem niedrigsten Nennwert, und die 2-Euro-Münze die Münze mit dem höchsten Nennwert.

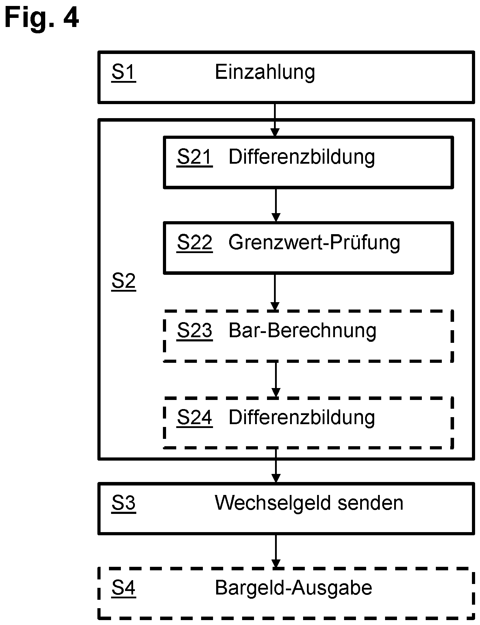

Die Schritte eines Zahlungsverfahrens sind in Fig. 4 noch einmal separat dargestellt. Nach der Einzahlung in Schritt S1, die vorliegend in bar erfolgt, wird in Schritt S2 der zu sendende Wechselgeldbetrag bestimmt, der in Schritt S3 als Wechselgeld an die Wechselgeldeinheit zu senden ist.

In der Zahlungseinheit 2 umfasst der Schritt S1 ein Erfassen des Einzahlbetrages. Der Einzahlbetrag kann dabei automatisch erfasst werden. Er ergibt sich als (Summe der) Nennwert(e) der Barzahlung. Optional ergänzt werden muss ein Geldbetrag (bzw. müssen die Geldbeträge), die in den eingezahlten Banknoten/Münzen bereits gespeichert sind.

Im Schritt S2 können neben der eigentlichen Differenzbildung S21 aus Einzahlbetrag und Zahlungsbetrag weitere optionale Schritt S22 bis S24 erfolgen. Die optionalen Schritte S22 bis S24 und S4 werden nun zunächst unter der Annahme beschrieben, dass das Wechselgeld - wie in Fig. 1 dargestellt-an eine Banknote (oder Münze) 10 des Zahlenden gesendet wird.

In Schritt S22 kann eine Grenzwertprüfung erfolgen, um zu bestimmen, ob in einem Schritt S4 zusätzlich eine Bargeld-Ausgabe erfolgen soll. Ist der Differenzbetrag größer als der Grenzwert (oder gleich), wird auch Bargeld an den Zahlenden ausgegeben. Ist der Differenzbetrag dagegen kleiner als der Grenzwert, wird nur Wechselgeld gesendet. In den nachfolgenden Schritten S23 und S24 wird daher zunächst ein als Wechselgeld auszugebender Bargeldbetrag berechnet und anschließend von dem Differenzbetrag abgezogen. Der Bargeldbetrag wird bevorzugt so berechnet, dass er in Form von Banknoten bereitgestellt werden kann. Die in Schritt S24 gebildete Folgedifferenz aus Differenzbetrag und Bargeldbetrag ergibt den zu sendenden Wechselgeldbetrag.

Figur 2 zeigt eine Ausgestaltung des Zahlungsverfahrens, in welcher die Zahlungseinheit 2 eine Wechselgeldeinheit - in Form einer Banknote (oder Münze) 20 mit Wechselgeldspeicher 26 - bereitstellt. Die Banknote (oder Münze) 20 der Zahlungseinheit 2 hat wiederum einen Nennwert, speichert vorzugsweise initial jedoch keinen Wechselgeldbetrag in dem Wechselgeldspeicher 26.

Das Bargeld 1 des Zahlenden kann herkömmliche Banknoten (und/ oder Münzen) und/oder Banknoten (oder Münzen) mit Wechselgeldspeicher umfassen. Dies gilt für das Verfahren in Fig. 2 aber analog auch in den Verfahren nach Fig. 1 oder 3. Herkömmliche Banknoten oder Münzen weisen keinen Wechselgeldspeicher auf. Ist in dem Wechselgeldspeicher einer eingezahlten Banknote (oder Münze) bereits ein Geldbetrag gespeichert, wird der Geldbetrag neben dem Nennwert als weiterer Teil des Einzahlbetrags berücksichtigt. Der Einzahlbetrag ergibt sich somit aus der Summe der Nennwerte und der gespeicherten (Gesamt-)Geldbeträge eingezahlter Banknoten und/oder Münzen mit oder ohne Wechselgeldspeicher.

Der Zahlende zahlt beispielsweise mit drei Banknoten als Bargeld 1 mit einem Nennwert von insgesamt 15 Euro (3x 5 Euro), wobei nur zwei der drei Banknoten einen Wechselgeldspeicher umfassen. In dem Wechselgeldspeicher der einen 5-Euro-Banknote ist ein Geldbetrag von 4,02 Euro gespeichert, die andere 5-Euro-Banknote mit Wechselgeldspeicher speichert einen Geldbetrag von 4,50 Euro. Bevorzugt umfassen die Banknoten mit Wechselgeldspeicher eine Anzeige, welche den aktuell gespeicherten Gesamt-Geldbetrag, also hier 4,02 Euro und 4,50 Euro, anzeigen. Der Zahlende bezahlt den Zahlungsbetrag von 17,22 Euro, hier in Kenntnis der gespeicherten Geldbeträge. Die Zahlungseinheit 2 liest die gespeicherten Geldbetrag aus und addiert ihn zu der Summe der Nennwerte hinzu. Es ergibt sich ein Einzahlbetrag von 23,52 Euro.

Die Zahlungseinheit 2 berechnet den Differenzbetrag aus Einzahlbetrag und Zahlungsbetrag, der als Wechselgeld an den Zahlenden zurück zu geben ist. Den Differenzbetrag, im Beispiel von 6,30 Euro, teilt die Zahlungseinheit 2 auf in den Nennwert einer Banknote (oder Münze) 20 mit Wechselgeldspeicher 26, im Beispiel 5,00 Euro, und den zu sendenden Wechselgeldbetrag, im Beispiel von 1,30 Euro.

Die Zahlungseinheit 2 sendet das Wechselgeld in der Höhe des zu sendenden Wechselgeldbetrages (1,30 Euro) in Schritt S3 an die - von der Zahlungseinheit 2 bereitgestellte - Banknote (oder Münze) 20 mit Wechselgeldspeicher 26. In Schritt S4 wird die Banknote (oder Münze) 20, welche das empfangene Wechselgeld in dem Wechselgeldspeicher 26 speichert, als Wechselgeld zurückgegeben. Der Zahlende erhält somit sein Wechselgeld anteilig in bar (Nennwert) und in digitaler Form (als Wechselgeldbetrag).

Wie in der Figur wiederum angedeutet, kann die Zahlungseinheit zusammen mit der das gesendete Wechselgeld enthaltenen Banknote (oder Münze) 20 optional Bargeld 4 ausgeben. Im diskutierten Beispielfall hätte eine GrenzwertPrüfung mit einem Grenzwert von 5 Euro ergeben, dass kein zusätzliches Bargeld zurückzugeben ist. Bei beispielsweise höherem Wechselgeldbetrag oder geringerem Grenzwert kann zusätzliches Bargeld 4 zurückgegeben werden. Der Bargeldanteil des Wechselgeldes, der zusätzlich als Bargeld 4 zurückgegeben werden soll, wird dann in Schritt S23 berechnet und der zu sendende Wechselgeldbetrag erst in Schritt S24 berechnet. Insbesondere wird dabei vorab der Nennwert der Banknote (oder Münze) 20 vom Differenzbetrag abgezogen. Das Bargeld 4 kann wiederum sowohl herkömmliche Banknoten (oder Münzen) umfassen als auch Banknoten (oder Münzen) mit leerem Wechselgeldspeicher umfassen.

Fig. 3 zeigt eine weitere Ausgestaltung eines Zahlungsverfahrens. Der Zahlende bezahlt in Schritt S1 mit seiner Banknote 30 mit Wechselgeldspeicher 36. Die Zahlungseinheit 2 sendet in Schritt S3 das Wechselgeld, welches dem zu sendenden Wechselgeldbetrag entspricht, an die eingezahlte Banknote 30 des Zahlenden. Der Zahlende erhält in Schritt S4 von der Zahlungseinheit 2 seine Banknote 30 zurück, in welcher nun das empfangene Wechselgeld gespeichert ist.

Analog zu Fig. 1 oder Fig. 2 kann weiteres Bargeld 1 als Teil der Zahlung empfangen werden und/oder weiteres Bargeld 4 als Teil des Wechselgeldes zurückgezahlt werden.

In Varianten des Verfahrens nach Fig. 3 zahlt der Zahlende mit seiner Banknote 30 ohne zu wissen, ob er diese Banknote zurück erhält. Besonders bevorzugt kennt er dabei den im Wechselgeldspeicher 36 gespeicherten Geldbetrag aktuell nicht bzw. muss ihn nicht kennen. Beispielsweise weist die Banknote (oder Münze) 30 keine Anzeige auf. Die Anzeige würde ein unmittelbares überprüfen des gespeicherten Geldbetrages ermöglichen. Er erhält daher überraschend eine seiner Banknoten wieder zurück.

Der Zahlende besitzt beispielsweise initial eine herkömmliche 5-Euro-Banknote als Bargeld 1 sowie eine 10-Euro-Banknote als Banknote 30, in welcher bereits 8,50 Euro gespeichert sind. Er zahlt beide Banknoten ein, um einen Zahlungsbetrag von 12,30 Euro zu bezahlen. Die Zahlungseinheit 2 bestimmt den Einzahlbetrag der Zahlung auf insgesamt 23,50 Euro (=10+5+8,50). Die Differenzberechnung ergibt 12,20 Euro als Wechselgeld. Nun entscheidet die Zahlungseinheit 2, dass das Wechselgeld durch die Banknote 30 mit dem Nennwert von 10 Euro und als darin gespeichertes Wechselgeld in Höhe von 2,20 Euro zurückgegeben werden soll. Die Zahlungseinheit 2 empfängt den (gesamten) bereits gespeicherten Geldbetrag von der Banknote 30 genauso wie von jeder anderen Banknote (oder Münze) mit Wechselgeldspeicher. Der Wechselgeldspeicher 36 ist nun leer, er enthält also keinen Datensatz mehr, der einem Geldbetrag entspricht. Anschließend wird das Wechselgeld, welches dem zu sendenden Wechselgeldbetrag von 2,20 Euro entspricht, an die Banknote 30 gesendet.

Sind in dem Wechselgeldspeicher 36 der Banknote (oder Münze) 30 mehrere Datensätze gespeichert, die einem Geldbetrag entsprechend, kann die Zahlungseinheit 2 einen (oder mehrere) der Datensätze auswählen und empfängt nur die ausgewählten Geldbeträge von dem Wechselgeldspeicher 36. In Varianten des Verfahrens bleibt mindestens ein bereits vorhandener Datensatz, der einem Geldbetrag entspricht, in der eingezahlten Banknote (oder Münze) 30 gespeichert und wird auch wieder in Schritt S4 mit an den Zahlenden zurückgegeben.

Bleiben wir im Beispiel der 10-Euro-Banknote mit einem gespeicherten Gesamtgeldbetrag von 8,50 Euro, könnte der Gesamtgeldbetrag in drei Wechselgeldbeträgen vorliegen: 1,48 Euro; 1,02 Euro und 6 Euro. Zieht man vom Einzahlbetrag von unverändert 23,50 Euro den Nennwert von 10 Euro der eingezahlten und zurückzugebenden Banknote mit Wechselgeldspeicher ab, stehen 13,50 Euro für den Zahlungsbetrag von 12,30 Euro zur Verfügung. Die Zahlungseinheit 2 könnte wie zuvor den vorhandenen Gesamtgeldbetrag empfangen und 2,20 Euro als Wechselgeld senden. Alternativ kann Sie nun jedoch aus den drei Geldbeträgen nur die ersten beiden auswählen und empfangen, so dass sie als Wechselgeld nur noch 1,18 Euro an die auszugebende Banknote senden muss, da 1,02 unverändert im Wechselgeldspeicher verbleiben.

In weiteren Varianten des Verfahrens nach Fig. 3 zahlt der Zahlende mit seiner Banknote (oder Münze) 30 und weiß dabei, dass er diese Banknote (oder Münze) 30 mit Wechselgeldspeicher (oder zumindest eine seiner eingezahlten Banknoten oder Münzen) zurückerhalten wird. Eine solche Situation kann beispielsweise vorliegen, wenn alle Banknoten (oder Münzen) mit Wechselgeldspeicher im Währungssystem den gleichen Nennwert haben.

Es können in dem Währungssystem insbesondere alle Banknoten mit dem niedrigsten Nennwert - oder alternativ alle Münzen mit dem höchsten Nennwert - mit einem Wechselgeldspeicher versehen sein. Folglich erkennt die Zahlungseinheit sofort, welche eingezahlte Banknote oder Münze mit Wechselgeldspeicher wieder mit dem zu sendenden Wechselgeldbetrag zurückgegeben werden soll.

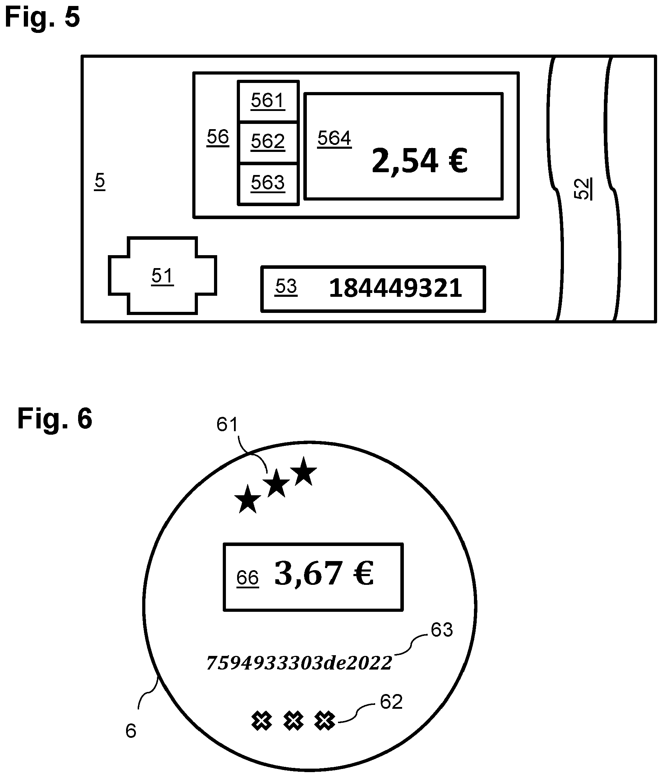

Fig. 5 zeigt eine systematische Skizze einer Banknote 5 mit Wechselgeldspeicher 56. Die Banknote umfasst, wie für Banknoten üblich, mehrere Sicherheitsmerkmale, beispielsweise in Form von Sicherheitselementen, wie einem dargestellten Sicherheitspatch 51 und einem dargestellten Sicherheitsstreifen 52. Die Sicherheitsmerkmale können optional optisch variabel sein, also für den Betrachter betrachtungswinkelabhängig unterschiedlich aussehen. Bekannte Sicherheitselemente können beispielsweise in der Form eines Patches, Streifens oder Fadens vorliegen. Die Banknote umfasst ferner eine Identifikationsnummer, welche dem Wechselgeldspeicher 56 zugeordnet ist. Die Identifikationsnummer kann im Wechselgeldspeicher gespeichert sein. Optional ist sie als sichtbare Identifikationsnummer 51 auf der Banknote aufgebracht, beispielsweise aufgedruckt oder gelasert. Eine Seriennummer, welche der Banknote zugeordnet ist, ist vorliegend nicht dargestellt, ist aber ebenfalls auf der Banknote vorhanden. Die Identifikationsnummer kann von der Seriennummer abhängig sein. Sie kann die Seriennummer beispielsweise ganz oder teilweise enthalten, entweder direkt (alle Zeichen oder bestimmte Zeichen der Seriennummer) oder in abgeleiteter Form (als Funktion f(Seriennummer) oder f(Zeichen aus Seriennummer) enthalten.

Der Wechselgeldspeicher 56 umfasst neben einem Speicher 562, einen Prozessor 561, eine Schnittstelle 563 sowie optional eine Anzeige 564.

Die Anzeige 564 zeigt den empfangenen Wechselgeldbetrag, beispielsweise permanent oder für einen vorbestimmten Zeitraum (wie 2 - 20 Sekunden), an und optional den insgesamt gespeicherten Gesamt-Geldbetrag, beispielsweise permanent nach Ablauf des Zeitraumes. Optional wird dem Zahlenden, durch die Banknote oder die Zahlungseinheit, akustisch das Senden des Wechselgeldes signalisiert. Mit einem solchen akustischen Signal kann beispielsweise der vorbestimmte Anzeigezeitraum kürzer gewählt werden als ohne ein solches Signal.

Die Information über den gespeicherten Gesamt-Geldbetrag und/oder die einzelnen gespeicherten Wechselgeldbeträge kann - für eine Benutzerausgabe der Information - über die Schnittstelle 563 an ein weiteres Gerät übertragen werden. Das weitere Gerät kann beispielsweise ein mobiles Endgerät, eine Smartwatch oder ein Rechner, wie PC, Tablet oder Notebook, sein. Der oder die gespeicherten Geldbeträge werden von dem weiteren Gerät angezeigt oder anderweitig, beispielsweise akustisch oder taktil (als Braille-Schrift), ausgegeben.

Ein Ablaufdatum für die Gültigkeit des Wechselgeldspeichers 56 kann, beispielsweise als Jahreszahl, auf dem Wechselgeldspeicher aufgedruckt sein oder farblich dargestellt sein, beispielsweise als Hintergrundfarbe der Anzeige, wobei jede Farbe ein Jahr symbolisiert.

Der Wechselgeldspeicher 56 empfängt das Wechselgeld über die Schnittstelle 563 und speichert es in dem Speicher 561. Als Schnittstelle 563 wird vorzugsweise eine kontaktlose Schnittstelle verwendet, wie NFC- (oder RFID-), UHFoder Bluetooth Low Energy-Schnittstelle. Nach dem Erreichen eines Ablaufdatums, welches zusätzlich oder alternativ - beispielsweise in Form eines Zertifikates - in dem Speicher 561 abgelegt ist, kann der Wechselgeldspeicher 56 keine weiteren Geldbeträge mehr empfangen (und speichern). Bereits in dem Wechselgeldspeicher 56 gespeicherte Geldbeträge können jedoch entweder unbegrenzt oder für einen an das Ablaufdatum anschließenden Zeitraum, beispielsweise eines weiteren Jahres, gesendet (bzw. ausgelesen) werden.

Fig. 6 zeigt eine systematische Skizze einer Münze 6 mit Wechselgeldspeicher 66. Die Komponenten des Wechselgeldspeichers 66, wie Prozessor, Speicher, Schnittstelle oder Anzeige sind nicht erneut dargestellt. Die Münze umfasst ebenfalls zwei Sicherheitsmerkmale 61, 62, welche beispielsweise in die Metalloberfläche der Münze eingeprägt oder eingesetzt sein können. Eine Identifikationsnummer 63 des Wechselgeldspeichers ist ebenfalls auf der Münze 6 vorhanden. Die Identifikationsnummer kann - wie in der Figur in den letzten vier Ziffern dargestellt eine Datumsangabe ("2022") enthalten. Das Ablaufdatum des Wechselgeldspeichers, der in diesem Beispiel Ende 2022 seine Gültigkeit verliert, kann als Teil der Identifikationsnummer oder separat auf der Münze dargestellt sein. Eine farbliche Darstellung des Ablaufdatums beispielsweise mittels einer Farbe des Sicherheitsmerkmals 62 oder eines farbigen, insbesondere ringförmigen, Inlays aus einem Kunststoffmaterial ist alternativ möglich. Auch die Münze 6 wird nach dem Ablaufdatum keine neues Wechselgeld mehr speichern. Der bereits gespeicherte Gelbetrag kann dagegen, ggf. anders zeitlich begrenzt, weiter ausgelesen werden.

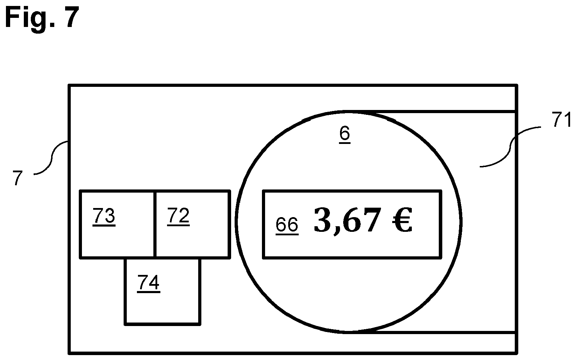

Fig. 7 zeigt eine Münze 6, die temporär in einer Aufnahme 71 einer - vorzugsweise mobilen - Einheit 7, wie einem Einkaufskorb oder -wagen, eingesetzt ist. Die Münze 6 des Zahlenden ist bei der Zahlung temporär in der Aufnahme 71 und wird danach wieder aus der Aufnahme 71 entfernt. Die Aufnahme 71 ist im gezeigten Beispiel so gestaltet, beispielsweise nach oben offen oder nach oben transparent, dass die Anzeige der Münze für den Zahlenden sichtbar bleibt. Die Münze 6 aktiviert in ihrem eingesetzten Zustand die mobile Einheit 7. Sie entriegelt beispielsweise den Einkaufswagen, der zuvor nicht mobil ist, wie es für Münzen hinreichend bekannt ist.

Die mobile Einheit 7 umfasst optional eine erste Schnittstelle 72, wie NFC-Schnittstelle, zur Kommunikation mit der eingesetzten Münze 6, sowie eine zweite Schnittstelle 73 mit höherer Reichweite, wie Bluetooth oder Bluetooth Low Energy, zur Kommunikation mit der Zahlungseinheit. Somit kann die Münze 6, die nur eine Schnittstelle mit geringer Reichweite aufweist, über die mobile Einheit 7 das Wechselgeld über eine größere Entfernung, wie 0,30 bis 2,5 m, von der Zahlungseinheit empfangen. Die mobile Einheit 7 kann zudem eine Batterie 74 umfassen, welche die internen Komponenten 72, 73 versorgt.

Während eine mobile Einheit 7 mit Aufnahme 71 für die Banknote oder Münze mit Wechselgeldspeicher in der Regel zusammen mit einer stationären Zahlungseinheit, wie Kasse, eingesetzt wird, ist auch die Verwendung zusammen mit einer mobilen Zahlungseinheit denkbar. Eine stationäre Einheit 7 mit Aufnahme 71 für die Banknote oder Münze mit Wechselgeldspeicher, wie beispielsweise ein Tisch in einem Servicebereich, wird dagegen vorzugsweise zusammen mit einer mobilen Zahlungseinheit, wie tragbarem Zahlungsterminal oder tragbarem Kartenlesegerät, eingesetzt.

Die in den Figuren 5 und 6 dargestellte Banknote 5 bzw. Münze 6 kann in jedem der zu Figur 1 bis 4 beschriebenen Abläufe verwendet werden. Wird die Banknote oder Münze dagegen in eine Einheit 7 mit Aufnahme 71 eingesetzt, bleibt sie in der Regel im Besitz des Zahlenden, wie es zu Figur 1 (oder 4) beschrieben ist.

### Bezugszeichenliste

- 1, 4: Bargeld
- 2: Zahlungseinheit
- 10, 20, 30: Münze oder Banknote mit Wechselgeldspeicher
- 16, 26, 36: Wechselgeldspeicher

- S1-S4, S21-S24: Schritte des Zahlungsverfahrens

- 5: Banknote
- 6: Münze

- 51, 61: erstes Sicherheitsmerkmal
- 52, 62: zweites Sicherheitsmerkmal
- 53, 63: Identifikationsnummer
- 56, 66: Wechselgeldspeicher
- 561: Prozessor
- 562: Speicher
- 563: Schnittstelle
- 564: Anzeige

- 7: Einkaufswagen
- 71: Münz-Aufnahme
- 72: NFC-Schnittstelle
- 73: Bluetooth-Schnittstelle
- 74: Batterie

## Patentansprüche

1. Zahlungsverfahren mit Wechselgeld, umfassend die Schritte:
a) Berechnen (S2) eines Wechselgeldbetrags ausgehend von einem Zahlungsbetrag und einem Einzahlbetrag in einer Zahlungseinheit (2);
b) Senden (S3) von Wechselgeld, welches dem Wechselgeldbetrag entspricht, von der Zahlungseinheit (2) an eine Wechselgeldspeichereinheit;
**dadurch gekennzeichnet, dass**
die Wechselgeldspeichereinheit eine Münze (6) oder Banknote (5) ist, welche einen Wechselgeldspeicher (66; 56) umfasst.

2. Zahlungsverfahren nach Anspruch 1, **dadurch gekennzeichnet, dass** die Münze (6) oder Banknote (5) mit Wechselgeldspeicher (66; 56) einen Nennwert aufweist, der insbesondere positiv ist oder Null ist, und/oder ein gesetzliches Zahlungsmittel ist.

3. Zahlungsverfahren nach Anspruch 1 oder 2, **dadurch gekennzeichnet, dass** in der Zahlungseinheit (2) anhand eines vorbestimmten Grenzwerts geprüft wird (S22), der vorzugsweise einem Nennwert einer Banknote oder einer Münze entspricht, ob entweder nur der Wechselgeldbetrag an die Wechselgeldspeichereinheit gesendet (S3) wird oder der Wechselgeldbetrag an die Wechselgeldspeichereinheit gesendet (S3) wird und ein Bargeldbetrag als Wechselgeld auszugeben (S4) ist.

4. Zahlungsverfahren nach Anspruch 1 bis 3, **dadurch gekennzeichnet, dass** in der Zahlungseinheit (2) ein zusätzlich als Wechselgeld auszugebender Bargeldbetrag errechnet (S23) wird, der insbesondere in Form von einer oder mehreren Banknoten ausgegeben werden kann, wobei der Wechselgeldbetrag insbesondere berechnet wird durch Abziehen (S24) des Bargeldbetrages von der Differenz aus Einzahlbetrag und Zahlungsbetrag.

5. Zahlungsverfahren nach einem der Ansprüche 1 bis 4, **dadurch gekennzeichnet, dass** mit Bargeld, insbesondere nur in Form von einer oder mehreren Banknoten, bezahlt wird.

6. Zahlungsverfahren nach einem der Ansprüche 1 bis 5, **dadurch gekennzeichnet, dass** die Zahlungseinheit (2) die Wechselgeldspeichereinheit (20) bereitstellt, wobei die auszugebende Wechselgeldspeichereinheit (20) das gesendete Wechselgeld als Wechselgeldbetrag umfasst und den Nennwert aufweist, der zumindest einen Teil eines in Bargeld als Wechselgeld auszugebenden Bargeldbetrages oder den ganzen Bargeldbetrag bildet.

7. Zahlungsverfahren nach einem der Ansprüche 1 bis 5, **dadurch gekennzeichnet, dass** die Wechselgeldspeichereinheit (30) als Teil der Einzahlung bereitgestellt wird, wobei vorzugsweise in einer Berechnung des Einzahlbetrages
- entweder der Einzahlbetrag unabhängig von einem Nennwert der Wechselgeldspeichereinheit (30) ist oder der Nennwert der Wechselgeldspeichereinheit (30) zumindest einen Teil des Einzahlbetrages bildet; und/oder
- ein bereits in der eingezahlten Wechselgeldspeichereinheit (30) vorhandener Geldbetrag zumindest einen Teil des Einzahlbetrages bildet.

8. Zahlungsverfahren nach einem der Ansprüche 1 bis 5, **dadurch gekennzeichnet, dass** die Wechselgeldspeichereinheit (10), welche vorzugsweise bereits einen vorhandenen Geldbetrag speichert, unabhängig von der Zahlungseinheit (2) bereitgestellt wird, wobei weiter vorzugsweise der vorhandene Geldbetrag in der Zahlungseinheit (2) empfangen wird und der empfangene Geldbetrag einen Teil des Einzahlbetrages bildet.

9. Zahlungsverfahren nach einem der Ansprüche 1 bis 8, **dadurch gekennzeichnet, dass** in einer Berechnung des Einzahlbetrages, von mindestens einer weiteren Münze oder Banknote mit Wechselgeldspeicher (1; 5; 6), welche einen vorhandenen Geldbetrag speichert und die eingezahlt ist, der Nennwert und der vorhandene Geldbetrag Teile des Einzahlbetrages bilden.

10. Zahlungsverfahren nach einem der Ansprüche 1 bis 9, **dadurch gekennzeichnet, dass** der Wechselgeldspeicher (5; 6) den empfangenen Wechselgeldbetrag speichert; und vorzugsweise
- den empfangenen Wechselgeldbetrag und/oder einen insgesamt gespeicherten Geldbetrag anzeigt; und/oder
- der Wechselgeldspeicher (5; 6) das Wechselgeld entweder in getrennten Datensätzen verwaltet oder in nur einem Datensatz für den insgesamt gespeicherten Geldbetrag verwaltet.

11. Zahlungsverfahren nach einem der Ansprüche 1 bis 10, **dadurch gekennzeichnet, dass** nur Münzen oder Banknoten eines dedizierten Nennwertes einen Wechselgeldspeicher (1; 5; 6) aufweisen.

12. Zahlungsverfahren nach einem der Ansprüche 1 bis 11, **dadurch gekennzeichnet, dass** der Wechselgeldspeicher (56; 66) der Münze oder Banknote umfasst:
- einen Speicherbereich (561) für Wechselgeld; und/oder
- eine Anzeige (564) zum Anzeigen eines gespeicherten und/ oder empfangenen Geldbetrages; und/oder
- eine kontaktlose Schnittstelle (562).

13. Zahlungsverfahren nach einem der Ansprüche 1 bis 12, **dadurch gekennzeichnet, dass** die Münze (6) oder Banknote (5) in eine Aufnahme (71) einer Einheit (7) eingesetzt ist, wobei vorzugsweise
- die Einheit (7) eine Waren-Transporteinheit ist; und/ oder
- die Einheit (7) durch Einsetzen der Münze oder Banknote mit Wechselgeldspeicher aktiviert, insbesondere entriegelt, wird; und/oder
- die Einheit (7) eine eigene Energieversorgung, vorzugsweise Batterie, umfasst; und/oder
- die Aufnahme (71) der Einheit (7) so ausgestaltet ist, dass eine Anzeige (564) der eingesetzten Münze oder Banknote, welche insbesondere einen Geldbetrag anzeigt, sichtbar bleibt; und/oder
- die Einheit (7) eine erste Schnittstelle (72) zur Kommunikation mit dem Wechselgeldspeicher (66; 56) der Münze (6) oder Banknote (5) umfasst und eine zweiten Schnittstelle (73) mit höherer Reichweite zur Kommunikation mit der Zahlungseinheit (2) umfasst.

14. Zahlungsverfahren nach einem der Ansprüche 1 bis 13, **dadurch gekennzeichnet, dass** dem Wechselgeldspeicher (56; 66) der Münze (6) oder Banknote (5) ein Ablaufdatum zugeordnet ist, wobei vorzugsweise
- die Münze (6) oder Banknote (5) nach Erreichen des Ablaufdatums als Zahlungsmittel, vorzugsweise nur, noch mit ihrem Nennwert verwendbar ist; und/ oder
- nach Erreichen des Ablaufdatums der Wechselgeldspeicher (56; 66) keine weiteren Geldbeträge mehr speichert, wobei vorzugsweise auch nach Erreichen des Ablaufdatums der Wechselgeldspeicher (56; 66) einen bereits gespeicherten Geldbetrag weiterhin senden kann.

15. Zahlungssystem umfassend eine Zahlungseinheit (2) und mindestens eine Münze (6) oder Banknote (5) mit Wechselgeldspeicher (65; 55), wobei das System eingerichtet ist zur Ausführung eines Verfahrens nach einem der Ansprüche 1 bis 14.

16. Zahlungssystem nach Anspruch 15, wobei das System umfasst:
- eine Vielzahl von Zahlungseinheiten (2) eines oder mehrerer Inhaber; und/ oder
- eine Vielzahl von Münzen (6) oder Banknoten (5) mit Wechselgeldspeicher (65; 55), insbesondere jeweils nach Anspruch 11; und/oder
- eine Einheit (7) mit Aufnahme (7), insbesondere nach Anspruch 12.
